# EUROPEAN PATENT APPLICATION

(11) **EP 4 606 213 A1**
(43) Date of publication of application: **27.08.2025**
(21) Application number: 24159641.0
(22) Date of filing: 26.02.2024
(51) Int. Cl.: A01G 20/47, E01H 1/08

(54) **A BLOWING AND/OR VACUUMING APPARATUS**

(71) Applicant: Husqvarna AB, 561 82 Huskvarna (SE)
(72) Inventor: Stoelzle, Bernd, 89077 Ulm (DE); Findeisen, René, 89250 Senden (DE); Teasdale, Lauren, County Durham, DL14 6BW (GB)
(74) Representative: Finkele, Rolf

(57) **Abstract**

The invention concerns a blowing and/or vacuuming apparatus **(100)** comprises a body **(200)** and at least one air pipe **(300, 400)** coupled with the body **(200)** and configured for blowing and/ or vacuuming operation. The at least one air pipe **(300, 400)** exhibits a first positioning member **(402).** The blowing and/or vacuuming apparatus **(100)** further comprises a wheel assembly **(500)** comprising a flexible bracket member **(502)** and at least one wheel **(504)** attached to the bracket member **(502),** whereby the bracket member **(502)** is configured to be moved on the at least one air pipe **(300, 400)** thereby surrounding the outer circumference of the at least one air pipe **(300, 400).** The first positioning member **(402)** of the at least one air pipe **(300, 400)** cooperatively links with the wheel assembly **(500).** The blowing and/or vacuuming apparatus **(100)** is characterized in that the at least one air pipe **(300, 400)** exhibits at least one second positioning member **(404, 406)** that is spaced from the first positioning member **(402)** along a longitudinal axis **(X-X', Y-Y')** of the at least one air pipe **(300, 400).**

## Description

### TECHNICAL FIELD

The present disclosure relates to a blowing and/ or vacuuming apparatus, and more particularly to the blowing and/ or vacuuming apparatus with a detachable wheel assembly.

### BACKGROUND

A blowing and/ or vacuuming apparatus is an outdoor cleaning tool for clearing and collecting fallen leaves. It blows away leaves on the ground by blowing and/ or sucks the leaves into a bag by vacuum and crushes the leaves before they enter the bag.

The currently available blowing and/ or vacuuming apparatuses are usually formed of a body and at least one air pipe, wherein the body comprises a housing, a motor, a fan blade, a safety switch, an air duct switching knob, a handle, etc., and the at least one air pipe is usually formed of an upper air pipe and a lower air pipe connected together. In addition, for their convenient use, some of them are provided with wheels attached to the lower air pipe, so that when in use the apparatus can be held by a hand and operated on a lawn by running of the wheels. However, the wheeling mechanism is integral with the lower air pipe and cannot be detached therefrom for packing, thus making the package bulky and transportation costs high when in mass production for customers.

An example of an improved blowing and/ or vacuuming apparatus is provided in United Kingdom Patent GB 2,464,356 B (hereinafter referred to as '356 reference). The '356 reference provides a leaf blower-vacuum apparatus that comprises a body, a blower pipe, and a wheel assembly, wherein a blower pipe comprises a first blower pipe adjacent, in use, to the body and to which a second blower pipe can be detachably connected. The wheel assembly can be detachably connected by a bracket to the distal end of the second blower pipe.

### SUMMARY OF THE INVENTION

In view of the above, it is an objective of the present invention to solve or at least reduce the drawbacks discussed above. The objective is at least partially achieved by a blowing and/or vacuuming apparatus.

According to an aspect of the present invention, the blowing and/or vacuuming apparatus comprises a body that further comprises a housing provided with at least one handle; a control switch provided with the at least one handle of the housing; and a motor and a fan blade housed within the housing. Further, the blowing and/or vacuuming apparatus comprises at least one air pipe configured for blowing and/ or vacuuming operation and exhibiting a first positioning member. Further, the blowing and/or vacuuming apparatus comprises a wheel assembly comprising a flexible bracket member and at least one wheel attached to the bracket member, whereby the bracket member is configured to be moved on the at least one air pipe thereby surrounding the outer circumference of the at least one air pipe, with the bracket member exhibiting a bolt to changeably adjust the diameter of the bracket member. Further, the first positioning member of the at least one air pipe cooperatively links with the wheel assembly. The blowing and/or vacuuming apparatus is characterized in that the at least one air pipe exhibits at least one second positioning member that is spaced from the first positioning member along a longitudinal axis of the at least one air pipe.

The present disclosure advantageously provides the blowing and/or vacuuming apparatus, that is easy to assemble for operation and equally easy to disassemble for storage. The body portion is detachably couplable to the at least one air pipe, which is further detachably couplable to the wheel assembly to form the blowing and/or vacuuming apparatus. The detachable coupling between the at least one air pipe and the wheel assembly is by virtue of the first positioning member and the at least one second positioning member provided with the at least one air pipe and the bracket member provided with the wheel assembly. The bracket member is configured to be selectively engaged with either the first positioning member or the at least one second positioning member to detachably couple the wheel assembly with the at least one air pipe. Further, advantageously the bracket member is configured to be selectively engaged with either the first positioning member or the at least one second positioning member to operatively configure the wheel assembly and the at least one air pipe in a pre-determined and optimum working orientation relative to a ground surface during the working of the blowing and/or vacuuming apparatus on the ground surface. In other words, the first positioning member and the at least one second positioning member allow a user to change in fixed steps the position of the wheel assembly relative to the at least one air pipe according to the working needs of the user or according to the size of the user.

According to an exemplary embodiment of the invention, the at least one second positioning member is spaced from the first positioning member along the longitudinal axis of the at least one air pipe by a distance of at least half the width of the bracket member along a longitudinal axis of the bracket member. The at least one second positioning member may be spaced from the first positioning member along the longitudinal axis of the at least one air pipe in a manner such that the bracket member when engaged with either one of the positioning members to detachably couple the wheel assembly with the at least one air pipe, may not cover and/ or engage and/ or interact with other adjacent one or more positioning members disposed on the at least one air pipe.

According to an exemplary embodiment of the invention, the at least one second positioning member is spaced from the first positioning member along the longitudinal axis of the at least one air pipe by the distance of at least the width of the bracket member along the longitudinal axis of the bracket member. The at least one second positioning member may be spaced from the first positioning member along the longitudinal axis of the at least one air pipe in a manner such that the bracket member of the wheel assembly when engaged with either one of the positioning members, may not interact cover and/ or engage and/ or interact with other adjacent one or more positioning members disposed on the at least one air pipe as this may result in unsecure coupling of the wheel assembly with the at least one air pipe, and/ or may result in wear of the positioning member and bracket member, and/ or may result in wrong orientation of the wheel and/ or the complete wheel assembly and/ or the at least one air pipe and/ or the complete blowing and/ or vacuuming apparatus relative to the ground surface during the working of the blowing and/or vacuuming apparatus on the ground surface.

According to an exemplary embodiment of the invention, the first positioning member and the at least one second positioning member are protrusions. The protrusions may either simply frictionally engage with the bracket member for detachably coupling the wheel assembly with the at least one air pipe or provide cooperating surface for the bracket member for detachably coupling the wheel assembly with the at least one air pipe depending upon the design of the bracket member. Further, the protrusions may be integrally or separately formed after construction with the at least one air pipe. Further, the protrusions may have preferably similar shape and size.

According to an exemplary embodiment of the invention, the bracket member exhibits an indent or a through hole that is shaped to cooperate with either one of the protrusions. The indent or the through hole may have a shape and size in accordance with the shape and size of the protrusions such that the cooperating protrusion may be able to at least partially insert into the indent or the through hole to allow secure and detachable coupling between the at least one air pipe and the wheel assembly.

According to an exemplary embodiment of the invention, the first positioning member and the at least one second positioning member are indents, and the bracket member exhibits a protrusion that is shaped to cooperate with either one of the indents. The positioning members and the bracket member may have any type of cooperating geometries intended to detachably couple the at least one air pipe and the wheel assembly.

According to an exemplary embodiment of the invention, the bracket member abuts with either one of the first positioning member and the at least one second positioning member. The bracket member may simply frictionally engage with the either of the first positioning member or the at least one second positioning member as per the requirement of the user to detachably couple the at least one air pipe and the wheel assembly. The bracket member may have simple design and may not necessarily require any geometrical structure integrally or separately formed with the bracket member, or any geometrical structure carved into the bracket member to be able to cooperate with either of the first positioning member or the at least one second positioning member to detachably couple the at least one air pipe and the wheel assembly.

According to an exemplary embodiment of the invention, the first positioning member and the at least one second positioning member together constitute an odd number of protrusions or indents. The at least one second positioning member may be even number of protrusions, for example two protrusions such that there may be three protrusions disposed on the at least one air pipe which may be selectively cooperated with for example the through hole, or the indent of the bracket member. If the through hole or the indent of the bracket member may be chosen to cooperate with the second protrusion of the three protrusions, then the protrusions on the extremes may also serve to structurally support the bracket member for further securing the detachable coupling between the at least one air pipe and the wheel assembly.

According to an exemplary embodiment of the invention, the first positioning member and the at least one second positioning member are located on the at least one air pipe only on one side relative to the longitudinal axis of the at least one air pipe. Such an arrangement may prevent the user from assembling the wheel assembly in the wrong direction, or orientation relative to the rest of the apparatus. Further, such an arrangement may allow carefree assembly of the wheel assembly on the at least one air pipe in the right direction, or orientation relative to the rest of the apparatus and thereby allowing optimum, efficient, and uninterrupted operation and/ or maneuvering of the apparatus.

According to an exemplary embodiment of the invention, the first positioning member is located on the at least one air pipe on one side relative to the longitudinal axis of the at least one air pipe. Further, the at least one second positioning member is more than one second positioning members located alternately on the at least one air pipe on both sides relative to the longitudinal axis of the at least one air pipe. The at least one second positioning member may be two positioning members located alternately on the at least one air pipe on both sides relative to the longitudinal axis of the at least one air pipe. Such an arrangement of the positioning members may come handy when the bracket member configured to be moved on the at least one air pipe and surrounding the outer circumference of the at least one air pipe may have provision to selectively engage with the positioning members alternatively disposed on both sides of the at least one air pipe without having to change the orientation of the bracket member or without having to rotate the bracket member by 180 degrees.

Before discussing the invention with the help of the drawings the invention will be briefly discussed in general. A blowing and/ or vacuuming apparatus is provided with at least one air pipe having a first positioning member and at least one second positioning member to allow different positions of the at least one-wheel relative to the longitudinal axis of the at least one air pipe according to working conditions or user size.

The apparatus according to the present invention may be easy to assemble and may not require extra elements for fixation, particularly of a wheel assembly with the at least one air pipe. The apparatus according to the present invention may provide the first positioning member and the at least one second positioning member for providing additional counterforce against forces during working of the apparatus thereby keeping the steering wheel in the selected position.

According to an exemplary embodiment of the invention, the apparatus may include several positioning members, particularly the first positioning member and the at least one second positioning member that may be selectively chosen by a user for detachably coupling the wheel assembly with the at least one air pipe.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** illustrates a schematic view of a blowing and/or vacuuming apparatus in accordance with an exemplary embodiment of the present disclosure;
**FIG. 2** illustrates a schematic view of an assembly of a wheel assembly with the at least one air pipe due to linking of a through hole of a bracket member with a first positioning member in accordance with an exemplary first embodiment of the present disclosure;
**FIG. 3** illustrates a schematic view of an assembly of a wheel assembly with the at least one air pipe due to linking of a through hole of a bracket member with a secondary positioning member in accordance with an exemplary second embodiment of the present disclosure;
**FIG. 4** illustrates a schematic view of an assembly of a wheel assembly with the at least one air pipe due to linking of a through hole of a bracket member with a tertiary positioning member in accordance with an exemplary third embodiment of the present disclosure; and
**FIG. 5** illustrates a schematic view of at least one air pipe and a wheel assembly taken from another side relative to any of the **FIGS. 1****,** **2****,** **3****,** **4** in accordance with an exemplary embodiment of the present disclosure.

### DETAILED DESCRIPTION OF THE DRAWINGS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left", "right", "horizontal", "vertical", "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

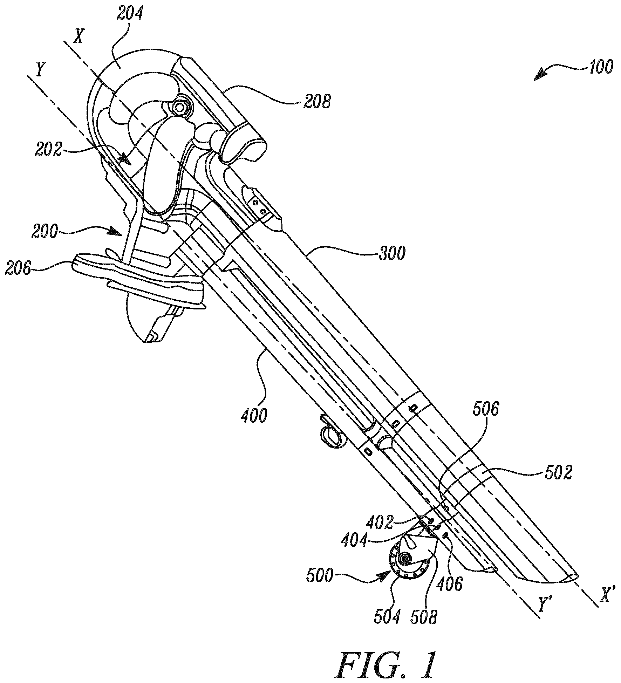

**FIG. 1** illustrates a schematic view of a blowing and/or vacuuming apparatus **100,** which will be referred to in this invention disclosure as an apparatus **100.** The apparatus **100** includes a body **200,** at least one air pipe **300, 400** configured for blowing and/ or vacuuming operation, and a wheel assembly **500.** During the assembly of the apparatus **100,** the body **200** is detachably coupled in a snap-fit manner with the at least one air pipe **300, 400.** Further, the at least one air pipe **300, 400** is detachably coupled to the wheel assembly **500.**

The body **200** of the apparatus **100** includes a housing **202** such that a motor and a fan blade is housed within the housing **202.** The housing **202** is provided with at least one handle **204, 206** configured to be selectively or simultaneously gripped by a user of the apparatus **100** to operate and/ or reliably maneuver the apparatus **100** on a ground surface. The at least one handle **204, 206** is a first handle **204** and a second handle **206.** Further, a control switch **208** is provided with the at least one handle **204, 206,** particularly the first handle **204** such that the control switch **208** is configured to operatively control the operation of the apparatus **100,** particularly the control switch is configured for activation and deactivation of the motor. Further, an air duct switching knob is provided with the at least one handle **204, 206** such that the air duct switching knob is configured to switch between the blowing and vacuuming mode of the apparatus **100.**

Further, the at least one air pipe **300, 400** of the apparatus **100** includes a first air pipe **300** and a second air pipe **400** such that during the detachable assembly of the at least one air pipe **300, 400** with the body **200,** the first air pipe **300** is disposed above the second air pipe **400.** The first air pipe **300** defines a longitudinal axis **X-X'** and the second air pipe defines a longitudinal axis **Y-Y'** such that the longitudinal axis **X-X'** is parallel to the longitudinal axis **Y-Y'** when the first air pipe **300** and the second air pipe **400** are detachably coupled to the body **200.**

Further, the at least one air pipe **300, 400** exhibits a first positioning member **402,** and at least one second positioning member **404, 406.** The first positioning member **402,** and the at least one second positioning member **404, 406** as illustrated in **FIG. 1****,** are disposed on the second air pipe **400** and the at least one second positioning member **404, 406** is two positioning members, namely a secondary positioning member **404** and a tertiary positioning member **406.** In other words, the first positioning member **402,** the secondary positioning member **404** and the tertiary positioning member **406** are disposed on the second air pipe **400** along the longitudinal axis **Y-Y'**. The secondary positioning member **404** is spaced from the first positioning member **402** along the longitudinal axis **Y-Y'** of the second air pipe **400.** Further, the tertiary positioning member **406** is spaced from the secondary positioning member **404** along the longitudinal axis **Y-Y'** of the second air pipe **400.**

With continuous reference to **FIG. 1****,** the apparatus **100** includes the wheel assembly **500** that further includes a flexible bracket member **502** and at least one wheel **504** attached to the bracket member **502.** The at least one wheel **504** as illustrated in **FIG. 1** is one wheel **504** fixedly/ or detachably coupled to the bracket member **502** via a secondary bracket **508.** In other words, the secondary bracket **508** functions as an interface between the bracket member **502** and the wheel **504** and the secondary bracket **508** includes a wheel mounting and rotating assembly.

Further, the bracket member **502** is configured to be moved on the at least one air pipe **300, 400** thereby surrounding the outer circumference of the at least one air pipe **300, 400.** In other words, the bracket member **502** is configured to be directly slipped onto the first air pipe **300** and the second air pipe **400** such that the bracket member **502** at least partially surrounds the outer circumference of the first air pipe **300** and the second air pipe **400** to detachably and selectively engage with the first positioning member **402,** the secondary positioning member **404,** and the tertiary positioning member **406** disposed on the second air pipe **400.** In other words, the first positioning member **402,** the secondary positioning member **404,** and the tertiary positioning member **406** of the second air pipe **400** are configured to be selectively and cooperatively link with the wheel assembly **500,** particularly the bracket member **502** of the wheel assembly **500.**

Further, the bracket member **502** exhibits a bolt **506** to changeably adjust the diameter of the bracket member **502** slipped onto the first air pipe **300** and the second air pipe **400** such that when the bracket member **502** cooperatively links with either of the first positioning member **402,** the secondary positioning member **404,** and the tertiary positioning member **406,** the bracket member **502** is locked tight by the bolt **506** on the first air pipe **300** and the second air pipe **400,** and thereby the wheel assembly **500** is locked in place in a detachable manner on the at least one air pipe **300, 400,** or simply the first air pipe **300** and the second air pipe **400.**

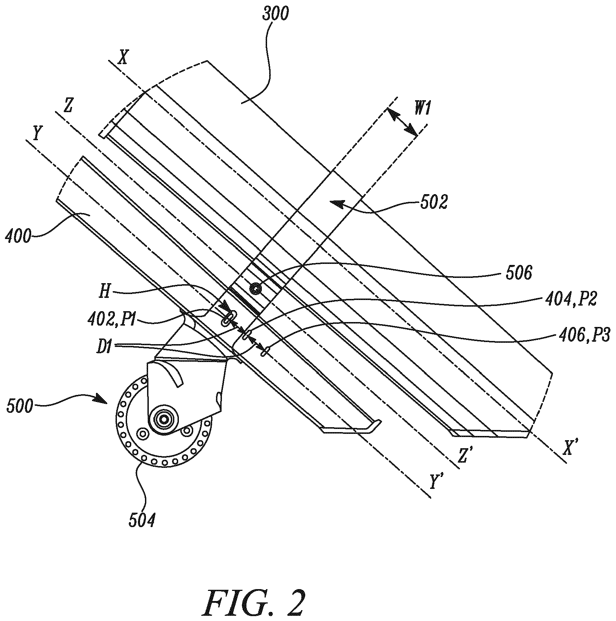

**FIG. 2** illustrates a schematic view of an assembly of the at least one air pipe **300, 400** with the wheel assembly **500.** The at least one air pipe **300, 400,** particularly the second air pipe **400** includes the first positioning member **402** and the at least one second positioning member **404, 406.** The first positioning member **402** and the at least one second positioning member **404, 406** are located on the at least one air pipe **300, 400,** particularly the second air pipe **400** only on one side relative to the longitudinal axis **Y-Y'** of the second air pipe **400.**

However, according to an exemplary embodiment of the invention, the first positioning member **402** is located on the at least one air pipe **300, 400,** particularly the second air pipe **400** on one side relative to the longitudinal axis **Y-Y'** of the second air pipe **400.** Further, the at least one second positioning member **404, 406** is more than one second positioning members **404, 406** located alternately on the at least one air pipe **300, 400,** particularly the second air pipe **400** on both sides relative to the longitudinal axis **Y-Y'** of the second air pipe **400.**

Further, the at least one second positioning member **404, 406** is spaced from the first positioning member **402** along the longitudinal axis **Y-Y'** of the second air pipe **400** by a distance **"D1"** of at least half the width **"W1"** of the bracket member **502** along a longitudinal axis **Z-Z'** of the bracket member **502** such that the distance **"D1"** is defined as the distance between any two adjacent positioning members **402, 404,** or **404, 406** along the longitudinal axis **Y-Y'** of the second air pipe **400.** In other words, the first positioning member **402** is spaced from the secondary positioning member **404** by the distance **"D1"** of at least half the width **"W1"** of the bracket member **502** along the longitudinal axis **Z-Z'** of the bracket member **502.** Further, the secondary positioning member **404** is spaced from the tertiary positioning member **406** by the distance **"D1"** of at least half the width **"W1"** of the bracket member **502** along the longitudinal axis **Z-Z'** of the bracket member **502.**

However, according to an exemplary embodiment of the invention, the at least one second positioning member **404, 406** may be spaced from the first positioning **402** member along the longitudinal axis **Y-Y'** of the second air pipe **400** by the distance **"D1"** of at least the width **"W1"** of the bracket member **502** along the longitudinal axis **Z-Z'** of the bracket member **502.** In other words, the first positioning member **402** may be spaced from the secondary positioning member **404** by the distance **"D1"** of at least the width **"W1"** of the bracket member **502** along the longitudinal axis **Z-Z'** of the bracket member **502.** Further, the secondary positioning member **404** may be spaced from the tertiary positioning member **406** by the distance **"D1"** of at the width **"W1"** of the bracket member **502** along the longitudinal axis **Z-Z'** of the bracket member **502.**

Further, the first positioning member **402** and the at least one second positioning member **404, 406** are indents, particularly three indents or protrusions **"P1, P2, P3",** particularly three protrusions **"P1, P2, P3".** In other words, the first positioning member **402** and the at least one second positioning member **404, 406** together constitute an odd number of protrusions **"P1, P2, P3"** or indents. However, as illustrated in **FIG. 2****,** the first positioning member **402** and the at least one second positioning member **404, 406** are protrusions **"P1, P2, P3",** particularly three protrusions **"P1, P2, P3",** or the first positioning member **402** and the at least one second positioning member **404, 406** together constitute an odd number of protrusions **"P1, P2, P3".** In other words, the first positioning member **402** is referred to as the protrusion **"P1",** the secondary positioning member **404** is referred to as the protrusion **"P2",** and the tertiary positioning member **406** is referred to as the protrusion **"P3".**

With continuous reference to **FIG. 2****,** the bracket member **502** defines the longitudinal axis **Z-Z'** such that the bracket member **502** exhibits an indent or a through hole **"H"** on one side of the longitudinal axis **Z-Z'.** The indent or the through hole **"H"** is shaped to cooperate with either one of the protrusions **"P1, P2, P3".** As illustrated in **FIG. 2****,** the bracket member **502** exhibits the through hole **"H"** on one side of the longitudinal axis **Z-Z',** that is shaped to cooperate with either one of the protrusions **"P1, P2, P3".**

When assembling the wheel assembly **500** with the at least one air pipe **300, 400,** the user slips the bracket member **502** of the wheel assembly **500** directly onto the first air pipe **300** and the second air pipe **400** until the bracket member **502,** particularly the through hole **"H"** of the bracket member **502** cooperatively links with either one of the protrusions **"P1, P2, P3"** selected by the user. As illustrated in **FIG. 2****,** the through hole "**H**" of the bracket member **502** cooperatively links with the protrusion **"P1",** or the first positioning member **402.** Further, after the linking or engagement between the through hole **"H"** of the bracket member **502** and the protrusion "**P1**", the bracket member **502** is locked tight by the bolt **506** on the first air pipe **300** and the second air pipe **400,** and thereby the wheel assembly **500** is locked in place in the detachable manner on the at least one air pipe **300, 400,** or simply the first air pipe **300** and the second air pipe **400.**

Further, according to an exemplary embodiment of the invention, the first positioning member **402** and the at least one second positioning member **404, 406** are indents, and the bracket member **502** exhibits a protrusion that is shaped to cooperate with either one of the indents.

Further, according to an exemplary embodiment of the invention, the bracket member **502** abuts with either one of the first positioning member **402** and the at least one second positioning member **404, 406.** In other words, the bracket member does not include any of the indent, or the through hole, or the protrusion and just frictionally engages with the either one of the first positioning member **402** and the at least one second positioning member **404, 406.**

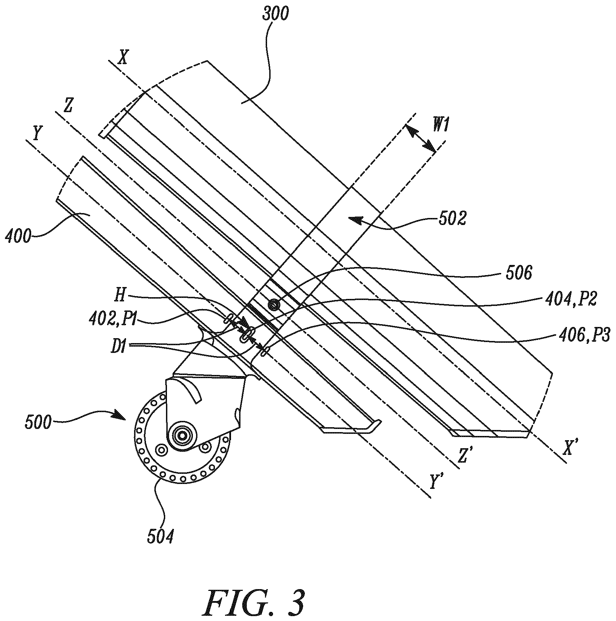

**FIG. 3** illustrates another schematic view of the assembly of the at least one air pipe **300, 400** with the wheel assembly **500.** The at least one air pipe **300, 400,** particularly the second air pipe **400** includes the first positioning member **402** and the at least one second positioning member **404, 406.** The first positioning member **402** and the at least one second positioning member **404, 406** are located on the at least one air pipe **300, 400,** particularly the second air pipe **400** only on one side relative to the longitudinal axis **Y-Y'** of the second air pipe **400.**

Further, the at least one second positioning member **404, 406** is spaced from the first positioning member **402** along the longitudinal axis **Y-Y'** of the second air pipe **400** by the distance **"D1"** of at least half the width **"W1"** of the bracket member **502** along the longitudinal axis **Z-Z'** of the bracket member **502** such that the distance **"D1"** is defined as the distance between any two adjacent positioning members **402, 404,** or **404, 406** along the longitudinal axis **Y-Y'** of the second air pipe **400.** In other words, the first positioning member **402** is spaced from the secondary positioning member **404** by the distance **"D1"** of at least half the width **"W1"** of the bracket member **502** along the longitudinal axis **Z-Z'** of the bracket member **502.** Further, the secondary positioning member **404** is spaced from the tertiary positioning member **406** by the distance **"D1"** of at least half the width **"W1"** of the bracket member **502** along the longitudinal axis **Z-Z'** of the bracket member **502.**

However, according to an exemplary embodiment of the invention, the at least one second positioning member **404, 406** may be spaced from the first positioning **402** member along the longitudinal axis **Y-Y'** of the second air pipe **400** by the distance **"D1"** of at least the width **"W1"** of the bracket member **502** along the longitudinal axis **Z-Z'** of the bracket member **502.** In other words, the first positioning member **402** may be spaced from the secondary positioning member **404** by the distance **"D1"** of at least the width **"W1"** of the bracket member **502** along the longitudinal axis **Z-Z'** of the bracket member **502.** Further, the secondary positioning member **404** may be spaced from the tertiary positioning member **406** by the distance **"D1"** of at the width **"W1"** of the bracket member **502** along the longitudinal axis **Z-Z'** of the bracket member **502.**

Further, the first positioning member **402** and the at least one second positioning member **404, 406** are protrusions **"P1, P2, P3",** particularly three protrusions **"P1, P2, P3".** In other words, the first positioning member **402** and the at least one second positioning member **404, 406** together constitute the odd number of protrusions **"P1, P2, P3".** In other words, the first positioning member **402** is referred to as the protrusion **"P1",** the secondary positioning member **404** is referred to as the protrusion **"P2",** and the tertiary positioning member **406** is referred to as the protrusion **"P3".**

With continuous reference to **FIG. 3****,** the bracket member **502** defines the longitudinal axis **Z-Z'** such that the bracket member **502** exhibits the through hole **"H"** on one side of the longitudinal axis **Z-Z'.** The through hole **"H"** is shaped to cooperate with either one of the protrusions **"P1, P2, P3".**

When assembling the wheel assembly **500** with the at least one air pipe **300, 400,** the user slips the bracket member **502** of the wheel assembly **500** directly onto the first air pipe **300** and the second air pipe **400** until the bracket member **502,** particularly the through hole **"H"** of the bracket member **502** cooperatively links with either one of the protrusions **"P1, P2, P3"** selected by the user. As illustrated in **FIG. 3****,** the through hole "**H**" of the bracket member **502** cooperatively links with the protrusion **"P2",** or the secondary positioning member **404.** Further, after the linking or engagement between the through hole "**H**" of the bracket member **502** and the protrusion **"P2",** the bracket member **502** is locked tight by the bolt **506** on the first air pipe **300** and the second air pipe **400,** and thereby the wheel assembly **500** is locked in place in the detachable manner on the at least one air pipe **300, 400,** or simply the first air pipe **300** and the second air pipe **400.**

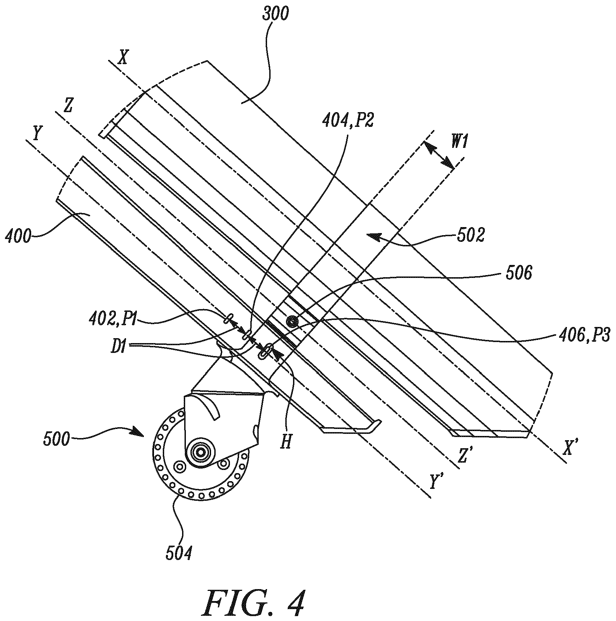

**FIG. 4** illustrates yet another schematic view of the assembly of the at least one air pipe **300, 400** with the wheel assembly **500.** The at least one air pipe **300, 400,** particularly the second air pipe **400** includes the first positioning member **402** and the at least one second positioning member **404, 406.** The first positioning member **402** and the at least one second positioning member **404, 406** are located on the at least one air pipe **300, 400,** particularly the second air pipe **400** only on one side relative to the longitudinal axis **Y-Y'** of the second air pipe **400.**

Further, the at least one second positioning member **404, 406** is spaced from the first positioning member **402** along the longitudinal axis **Y-Y'** of the second air pipe **400** by the distance **"D1"** of at least half the width **"W1"** of the bracket member **502** along the longitudinal axis **Z-Z'** of the bracket member **502** such that the distance **"D1"** is defined as the distance between any two adjacent positioning members **402, 404,** or **404, 406** along the longitudinal axis **Y-Y'** of the second air pipe **400.** In other words, the first positioning member **402** is spaced from the secondary positioning member **404** by the distance **"D1"** of at least half the width **"W1"** of the bracket member **502** along the longitudinal axis **Z-Z'** of the bracket member **502.** Further, the secondary positioning member **404** is spaced from the tertiary positioning member **406** by the distance **"D1"** of at least half the width **"W1"** of the bracket member **502** along the longitudinal axis **Z-Z'** of the bracket member **502.**

However, according to an exemplary embodiment of the invention, the at least one second positioning member **404, 406** may be spaced from the first positioning **402** member along the longitudinal axis **Y-Y'** of the second air pipe **400** by the distance **"D1"** of at least the width **"W1"** of the bracket member **502** along the longitudinal axis **Z-Z'** of the bracket member **502.** In other words, the first positioning member **402** may be spaced from the secondary positioning member **404** by the distance **"D1"** of at least the width **"W1"** of the bracket member **502** along the longitudinal axis **Z-Z'** of the bracket member **502.** Further, the secondary positioning member **404** may be spaced from the tertiary positioning member **406** by the distance **"D1"** of at the width **"W1"** of the bracket member **502** along the longitudinal axis **Z-Z'** of the bracket member **502.**

Further, the first positioning member **402** and the at least one second positioning member **404, 406** are protrusions **"P1, P2, P3",** particularly three protrusions **"P1, P2, P3".** In other words, the first positioning member **402** and the at least one second positioning member **404, 406** together constitute the odd number of protrusions **"P1, P2, P3".** In other words, the first positioning member **402** is referred to as the protrusion **"P1",** the secondary positioning member **404** is referred to as the protrusion **"P2",** and the tertiary positioning member **406** is referred to as the protrusion **"P3".**

With continuous reference to **FIG. 4****,** the bracket member **502** defines the longitudinal axis **Z-Z'** such that the bracket member **502** exhibits the through hole **"H"** on one side of the longitudinal axis **Z-Z'.** The through hole **"H"** is shaped to cooperate with either one of the protrusions **"P1, P2, P3".**

When assembling the wheel assembly **500** with the at least one air pipe **300, 400,** the user slips the bracket member **502** of the wheel assembly **500** directly onto the first air pipe **300** and the second air pipe **400** until the bracket member **502,** particularly the through hole "**H**" of the bracket member **502** cooperatively links with either one of the protrusions **"P1, P2, P3"** selected by the user. As illustrated in **FIG. 4****,** the through hole "**H**" of the bracket member **502** cooperatively links with the protrusion **"P3",** or the tertiary positioning member **406.** Further, after the linking or engagement between the through hole **"H"** of the bracket member **502** and the protrusion **"P3",** the bracket member **502** is locked tight by the bolt **506** on the first air pipe **300** and the second air pipe **400,** and thereby the wheel assembly **500** is locked in place in the detachable manner on the at least one air pipe **300, 400,** or simply the first air pipe **300** and the second air pipe **400.**

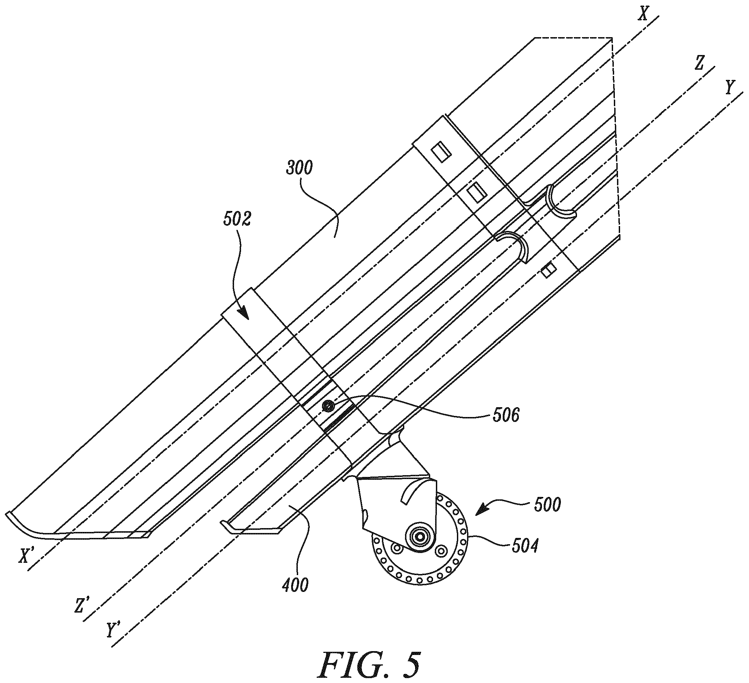

**FIG. 5** illustrates a schematic view of the at least one air pipe **300, 400** and the wheel assembly **500.** The at least one air pipe **300, 400,** particularly the second air pipe **400** includes the first positioning member **402** and the at least one second positioning member **404, 406.** The first positioning member **402** and the at least one second positioning member **404, 406** are located on the at least one air pipe **300, 400,** particularly the second air pipe **400** only on one side relative to the longitudinal axis **Y-Y'** of the second air pipe **400.** **FIG. 5** illustrates the at least one air pipe **300, 400** from another side relative to the longitudinal axis **Y-Y'** on which there are no first positioning member **402** and the at least one second positioning member **404, 406.** Further, the bracket member **502** defines the longitudinal axis **Z-Z'** such that the bracket member **502** exhibits the through hole "**H**" on one side of the longitudinal axis **Z-Z'.** The through hole "**H**" is shaped to cooperate with either one of the protrusions **"P1, P2, P3".** **FIG. 5** illustrates the bracket member **502** from another side relative to the longitudinal axis **Z-Z'** on which there is no through hole **"H".**

In the drawings and specification, there have been disclosed exemplary embodiments and examples of the invention and, although specific terms are employed, they are used in a generic and descriptive sense only and not for the purpose of limitation of the scope of the invention being set forth in the following claims.

### LIST OF ELEMENTS

- **100**: Blowing and/or vacuuming apparatus / Apparatus
- **200**: Body
- **202**: Housing
- **204**: Handle/ First Handle
- **206**: Handle/ Second Handle
- **208**: Control Switch
- **300**: Air Pipe/ First Air Pipe
- **400**: Air Pipe/ Second Air Pipe
- **402**: First Positioning Member
- **404**: Second Positioning Member/ Secondary Positioning Member
- **406**: Second Positioning Member/ Tertiary Positioning Member
- **500**: Wheel Assembly
- **502**: Bracket Member
- **504**: Wheel
- **506**: Bolt
- **508**: Secondary Bracket
- **X-X'**: Longitudinal Axis
- **Y-Y'**: Longitudinal Axis
- **Z-Z'**: Longitudinal Axis
- **P1, P2, P3**: Protrusions
- **H**: Through Hole
- **D1**: Distance
- **W1**: Width

## Claims

1. A blowing and/or vacuuming apparatus **(100),** comprising:
a body **(200)** comprising a housing **(202)** provided with at least one handle **(204, 206);** a control switch **(208)** provided with the at least one handle **(204, 206)** of the housing **(202);** and a motor and a fan blade housed within the housing **(202),**
at least one air pipe **(300, 400)** configured for blowing and/ or vacuuming operation exhibiting a first positioning member **(402),** and
a wheel assembly **(500)** comprising a flexible bracket member **(502)** and at least one wheel **(504)** attached to the bracket member **(502),** whereby the bracket member **(502)** is configured to be moved on the at least one air pipe **(300, 400)** thereby surrounding the outer circumference of the at least one air pipe **(300, 400),** with the bracket member **(502)** exhibiting a bolt **(506)** to changeably adjust the diameter of the bracket member **(502),**
wherein the first positioning member **(402)** of the at least one air pipe **(300, 400)** cooperatively links with the wheel assembly **(500),**
**characterized in that:**
the at least one air pipe **(300, 400)** exhibits at least one second positioning member **(404, 406)** that is spaced from the first positioning member **(402)** along a longitudinal axis **(X-X', Y-Y')** of the at least one air pipe **(300, 400).**

2. The apparatus **(100)** according to claim **1,**
wherein the at least one second positioning member **(404, 406)** is spaced from the first positioning member **(402)** along the longitudinal axis **(X-X', Y-Y')** of the at least one air pipe **(300, 400)** by a distance **(D1)** of at least half the width **(W1)** of the bracket member **(502)** along a longitudinal axis **(Z-Z')** of the bracket member **(502).**

3. The apparatus **(100)** according to claim **1,**
wherein the at least one second positioning member **(404, 406)** is spaced from the first positioning member **(402)** along the longitudinal axis **(X-X', Y-Y')** of the at least one air pipe **(300, 400)** by the distance **(D1)** of at least the width **(W1)** of the bracket member **(502)** along the longitudinal axis **(Z-Z')** of the bracket member **(502).**

4. The apparatus **(100)** according to any of the claims 1-3,
wherein the first positioning member **(402)** and the at least one second positioning member **(404, 406)** are protrusions **(P1, P2, P3)**.

5. The apparatus **(100)** according to claim 4,
wherein the bracket member **(502)** exhibits an indent or a through hole **(H)** that is shaped to cooperate with either one of the protrusions **(P1, P2, P3).**

6. The apparatus **(100)** according to any of the claims 1-3,
wherein the first positioning member **(402)** and the at least one second positioning member **(404, 406)** are indents, and the bracket member **(502)** exhibits a protrusion that is shaped to cooperate with either one of the indents.

7. The apparatus **(100)** according to any of the claims 1-3,
wherein the bracket member **(502)** abuts with either one of the first positioning member **(402)** and the at least one second positioning member **(404, 406).**

8. The apparatus **(100)** according to any one of the preceding claims, wherein the first positioning member **(402)** and the at least one second positioning member **(404, 406)** together constitute an odd number of protrusions **(P1, P2, P3)** or indents.

9. The apparatus **(100)** according to any one of the preceding claims, wherein the first positioning member **(402)** and the at least one second positioning member **(404, 406)** are located on the at least one air pipe **(300, 400)** only on one side relative to the longitudinal axis **(X-X', Y-Y')** of the at least one air pipe **(300, 400).**

10. The apparatus **(100)** according to any one of the preceding claims,
wherein the first positioning member **(402)** is located on the at least one air pipe **(300, 400)** on one side relative to the longitudinal axis **(X-X', Y-Y')** of the at least one air pipe **(300, 400),** and
wherein the at least one second positioning member **(404, 406)** is more than one second positioning members **(404, 406)** located alternately on the at least one air pipe **(300, 400)** on both sides relative to the longitudinal axis **(X-X', Y-Y')** of the at least one air pipe **(300, 400).**
